# EUROPEAN PATENT APPLICATION

(11) **EP 4 790 258 A1**
(43) Date of publication of application: **12.08.2026**
(21) Application number: 25382088.0
(22) Date of filing: 06.02.2025
(51) Int. Cl.: F03D 13/10, F03D 13/20, E04H 12/08

(54) **A TOOL FOR POSITIONING A PLURALITY OF BOLTS IN A TOWER FLANGE, AN INSTALLATION ARRAGAMENT AND ASSOCIATED METHOD**

(71) Applicant: Siemens Gamesa Renewable Energy Innovation & Technology S.L., 31621 Sarriguren (Navarra) (ES)
(72) Inventor: Barquero Perez De Albeniz, Oscar, 31180 ZIZUR MAYOR (ES); Bonazza, Gabriele, 31620 Huarte (ES)
(74) Representative: SGRE-Association

(57) **Abstract**

A tool 100 intended for positioning bolts is provided. The tool comprises a frame with a distal portion 1a and proximal portion 1b, a shaft a shaft (2) rotatably mounted on the proximal portion (1a) of the frame (1), moving means (3) operatively connected to the shaft (2) to facilitate rotation of said shaft (2) and a holding element (4) fixedly mounted on the shaft (2), configured to secure a plurality of bolts to be inserted I the holes of a tower flange (210).

Furthermore, an installation arrangement is provided and a method for positioning bolts, the steps of the method being providing the tool (100), placing the plurality of bolts within the holding element (4), positioning the shaft (2) and the holding element (4) and inserting the bolts into corresponding holes of the tower flange (210).

## Description

A tool intended for positioning bolts in a tower flange and a method for positioning bolts.

### FIELD OF THE INVENTION

The present invention relates to a tool intended for positioning a plurality of bolts in a tower flange.

Furthermore, the invention relates to a method for positioning the bolts with the tool.

### BACKGROUND OF THE INVENTION

In the field of wind turbines, some wind turbines have segmented towers, specifically steel segmented towers, which are joined by the flanges. The flange of one tower section is connected to the flange of another tower section by means of bolts thereby joining both tower sections.

During installation process of the wind turbine, the tower section is positioned in vertical position and the bolts are positioned into the flange holes manually by an operator.

A typical disadvantage of such known manual operation is that a considerable amount of time is required to arrange and secure the bolts within the corresponding assembling holes. In addition, due to the increase in size of towers, the number of the flange holes has increased, requiring a larger and heavier bolts, thus increasing the time of positioning the bolts manually. This also increases the risk of injury associated with fatigue of the workers by performing a repetitive task with a heavy object such as heavy bolts.

It is therefore a goal of the present invention to provide a tool intended for positioning bolts in a tower flange, which overcomes the above-mentioned disadvantages. In particular, a method for positioning the bolts with the tool shall be provided, preferably when the tower is in horizontal position, in which the time to positioning the bolts is reduced and the risk of injury associated with fatigue due to repetitive handling of heavy objects is eliminated.

### SUMMARY OF THE INVENTION

The object of the invention is achieved by the independent claims. The dependent claims describe advantageous developments and modifications of the invention.

In accordance with a first aspect of the invention there is provided a tool intended for positioning bolts in a tower flange of a working tower section. According to the present invention a "working tower section" is defined as the tower section where the bolts are introduced, which is where the tool operates. The tool comprises a frame, which has a proximal portion and a distal portion, in particular the distal portion has a lifting interface that is configured to engage with a connecting element. The tool comprises a shaft which is rotatably mounted on the proximal portion of the frame. The tool has moving means that are operatively connected to the shaft to facilitate rotation of said shaft. In addition, the tool comprises a holding element that is fixedly mounted on the shaft and is configured to secure a plurality of bolts within the holding element. The holding element retains the plurality of bolts in a curved arrangement, in particular said curved arrangement is essentially aligned with a bolt holes forming an arc in the tower flange. Furthermore, the tool may comprise a securing element configured to secure at least one bolt within the holding element.

One advantage relating to the described tool is that by having a holding element that retains a plurality of bolts in a curved arrangement that matches with the arc portion of the tower flange of the working tower section, allows the operator to position all the bolts in the portion of the tower flange at the same time, thereby introducing the plurality of bolts in a faster and easy way into the flange holes. In addition, the risk of injure of the operator due fatigue for carrying heavy bolts and positioning them manually into the flange holes repetitively is eliminated.

In an example, the holding element may comprise housings arrange parallel to the shaft, to retain the plurality of bolts therein also parallel to the shaft.

By having the plurality of bolts parallel to the shaft, the operator can control the position of the bolts by rotating the shaft. In addition, by having housings in the holding element, the bolts housed in such housings, may be separated the same distance that the flange holes have between each other, thanks to the housing alignment/arrangement. Thereby, when the plurality of bolts is positioned into their respective flange hole, the position of each bolt will match correctly. This will save time as the operator does not have to correct the position of the bolts.

In an example, the moving means may comprise a gear transmission, in particular the moving means may further comprise a crank or wheel which may be operatively connected to the gear transmission in such a way that a manual mechanical force may be applied on the crank to rotate the shaft. Since the plurality of bolts have a heavy weight, by having a gear transmission and a crank, the operator may rotate the shaft easily without much effort and with precision.

In an example, the moving means may be configured to rotate the shaft under the influence of a mechanically, electrically, pneumatic and/or hydraulically generated force. By having this configuration, the tool may be automated to be operated automatically with a mechanical, electrical, pneumatic and/or hydraulic means.

In an example, the securing element may be a belt, a strap or at least one magnet that may be configured to secure at least one bolt or the plurality of bolts within the holding element. By having the securing element, the plurality of bolts may be secured further avoiding they fall when the tool is rotated to position the bolts within their respective flange hole.

In an example, the tool may further comprise an adjustable mechanism that may be configured to operatively fix the holding element to the shaft through multiple positions along the length of the shaft. By having the adjustable mechanism, the tool may be adjusted to the length of the bolts, thereby allowing to use the tool with different sizes of bolts.

In an example, the adjustable mechanism may comprise a positioning plate configured to be fixedly attached to the shaft through multiple positions along the longitudinal axis of said shaft, with fastening means, and a supporting frame configured to extend at least partially along the length and/or height of the holding element and to mechanically connect to the positioning plate. In further examples, the adjustable mechanism may include means that allow longitudinal movement of the holding element through multiple positions along the shaft without the need for fastening or unfastening. For instance, a guiding element, such as a track system or slot system, may be integrated into the shaft or the positioning plate to enable this movement. Additionally, blocking means, such as a pin, may be used to secure the holding element at a desired position along the shaft.

By having this arrangement, the position of the plate may be change accordingly to the size of the bolts by fixing the position of the holding element along the shaft, thereby allowing to use the tool with different sizes of bolts.,

In an example, the shaft may extend as an appendage from the frame and may be configured to enter the tower flange parallel to the tower's longitudinal axis, while the frame may be remained external to the tower flange during operation.

In an example, the frame and the shaft may form an essentially C-shaped arrangement, wherein the proximal portion and the distal portion of the frame may form two legs of the C-shape, wherein the distal portion may be extended outwardly and transversely from the proximal portion, and the shaft may complete the C-shape as an appendage extending from the distal portion and configured to enter the tower flange during operation.

In an example, the shaft and the frame together form an essentially L-shaped arrangement, the shaft defining a first leg of the L-shape that extends into the tower flange, and the frame defining a second leg that remains external to the flange for lifting.

By having the C-shape or the L-shape disposition, the shaft may be introduced easily to the tower and may be placed close to the flange to position the plurality of bolts in their corresponding flange holes, meanwhile the frame remains external to the tower so the tool may be manipulated by the operator.

In an example, the tool further comprises a first counterweight element arranged to the shaft, and second counterweight element arranged to the frame, wherein the first counterweight element and the second counterweight element are configured to allow plates to be added or detached to adjust a weight balance. By having the first counterweight element, the rotation of the tool will be balanced and similarly, with the second counterweight element the inclination of the tool will be balanced.

In accordance with a second aspect of the invention there is also provided an installation arrangement that comprises the tool, a working tower section that comprises the tower flange, a lifting means configured to lift the tool and, a connecting element configured to connect the frame to the crane for lifting. The lifting means may be a crane or a lift trolley e.g., a hydraulic lift trolley with wheels.

By having this installation arrangement, the tool can be lifted with the lifting means and be placed in a position that allows to insert the plurality of bolts in their corresponding flange holes of the tower flange.

In accordance with a third aspect, a method is provided. The method according to the present invention is characterized by the steps of:
- providing the tool as described in any of the examples aforementioned,
- placing a plurality of bolts within the holding element,
- securing the plurality of bolts,
- lifting or moving the tool with a lifting means towards a tower flange of a working tower section, the tower section being preferably in horizontal position,
- positioning the shaft and the holding element within the tower flange,
- rotating the shaft and the holding element using the moving means until the plurality of bolts within the holding element are aligned with the plurality of bolt holes in the tower flange,
- inserting the bolts into corresponding holes of the tower flange, and
- releasing the bolts from the holding element.

The advantages of this method largely correspond to the above-mentioned advantages of the present invention. In particular, by performing this method the operator is allowed to insert a plurality of bolts at the same time in a tower flange in a faster and easy way without having to carry the heavy bolts one by one. Furthermore, it eliminates the risk due fatigue for performing this task repetitively with the heavy weight of the bolts.

In an example, the tower may be initially placed in a horizontal position, the method further comprising the steps:
- fixing an annular supporting plate within the working tower section, and
- lifting and rotating the working tower section with the lifting means to a vertical position, such that the annular supporting plate supports the plurality of bolts.

By initially placing the working tower section in horizontal position, it is easier to insert the plurality of bolts in the tower flange with the tool of the invention. Furthermore, the annular supporting plate may fix the plurality of bolts, thereby when the tower is lifted in vertical position, it may prevent the plurality of bolts to fall.

In an example, the method further comprises the steps of:
- placing a second tower section on top the working tower section,
- pushing upwards the bolts to introduce them partially into the flange holes of the second tower section and securing the bolts therein.

Advantageous configurations and embodiments of the method according to the invention follow from the claims dependent on claim 1, claim 12 and claim 13 as well as the following description. The advantageous features of the tool intended for positioning bolts in a tower flange, the installation arrangement and the method for positioning bolts can generally be combined.

### BRIEF DESCRIPTION OF THE DRAWINGS

Embodiments of the invention are now described, by way of example only, with reference to the accompanying drawings, of which:
Figure 1 schematically illustrates a tool intended for positioning bolts according to an example;
Figure 2 schematically illustrates a tool intended for positioning bolts in rotation according to an example; and
Figures 3a and 3b schematically illustrates an installation arrangement according to an example;
Figure 4a and 4b schematically illustrates the tool positioning the bolts in different parts of the tower flange; and
Figure 5a schematically illustrates and operator operating the tool to inserts the bolts in the tower flange.
Figure 5b schematically illustrates the bolts inserted by the tool.

The illustration in the drawings is in schematic form. It is noted that in different figures, similar or identical elements may be provided with the same reference signs.

### DESCRIPTION OF THE DRAWINGS

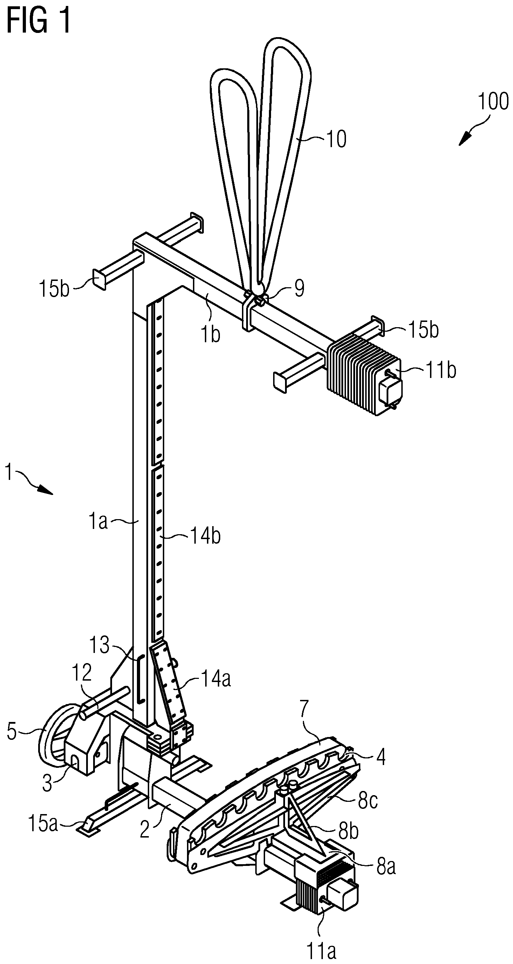

Fig. 1 shows a tool 100 intended for positioning bolts in a tower flange of a working tower section (not shown) according to an embodiment or example of the invention. More in particular, in such depicted example, the tool 100 comprise a frame 1 and a shaft 2. The frame has a proximal portion 1a and a distal portion 1b in respect to the shaft 2. The shaft 2 is rotatably mounted on the proximal portion 1a of the frame 1. The tool 100 has moving means 3 that are operatively connected to the shaft 2 to facilitate rotation of said shaft 2. Thus, the shaft 2 is connected to the frame 1 through the moving means 3 in such a way that allows the shaft 2 to rotate in respect to the frame 1.

The shaft 2 extends as an appendage from the frame 1 and is configured to enter the tower flange 210 (not shown) parallel to the tower's longitudinal axis, while the frame 1 remains external to the tower flange 210 during operation. the frame 1 and the shaft 2 form an essentially C-shaped arrangement, wherein the proximal portion 1a and the distal portion 1b of the frame 1 forms two legs of the C-shape, wherein the distal portion 1b extends outwardly and transversely from the proximal portion 1a, and the shaft 2 completes the C-shape as an appendage extending from the distal portion 1a and configured to enter the tower flange 210 (not shown) during operation.

The tool 100 also comprise a holding element 4 which is fixedly mounted on the shaft 2 and is configured to secure a plurality of bolts therein. The holding element 4 has a curved shape, in order to retain the plurality of bolts in a curved arrangement, in particular said curved arrangement is aligned with the bolt holes that forms an arc in the tower flange (not shown).

The holding element 4 may comprise housings to retain the plurality of bolts therein parallel to the shaft 2. The holding element 4 may be an interchangeable piece which may be selected according to the size of the bolts to be inserted.

The moving means 3 of the tool 100 comprise a gear transmission 6 and a crank 5. The crank 5 is operatively connected to the gear transmission 6 in such a way that a manual mechanical force applied on the crank 5 rotates the shaft 2. The moving means 3 are configured to rotate the shaft 2, the crank 5 may be activated manually by an operator or under the influence of a mechanically, electrically, pneumatic and/or hydraulically generated force.

The tool 100 comprises a securing element 7 configured to secure at least one bolt within the holding element 4. The securing element 4 may be a belt, a strap or at least one magnet to retain at least one bolt. In the particular case that the securing element 7 is a magnet or a plurality of magnets, the magnets may be arranged in the holding element 4. When the security element 7 is a plurality of magnets, these may be arranged in the holding element 4, having one magnet per bolt.

An adjustable mechanism 8 is configured to operatively fix the holding element 4 to the shaft 2 through multiple positions along the length of the shaft 2, thereby the adjustable mechanism 8 will be moved along the shaft 2 to adjust the position of the holding element 4 according to the size of the bolts. In the example depicted in Figure 1, the adjustable mechanism 8 comprises a positioning plate 8a and a supporting frame 8b, 8c. The positioning plate 8a is a plate with a plurality of holes that is configured to operatively fix the holding element 4 to the shaft 2 through multiple positions along the length of the shaft 2, the position is selected according to the length of the bolts. The positioning plate 8a is fixedly attached to the shaft 2 with fastening means that are introduced into these wholes to fix the holding element 4 in the shaft 2. The fastening means may be a screw, a bolt, a shaft, or a pin. The supporting frame (8b, 8c) is configured to extend at least partially along the length and/or height of the holding element 4 and to mechanically connect to the positioning plate 8a. The supporting frame 8b joins the positioning plate 8a, which is fixed to the shaft 2, to the supporting frame 8c that is fixed to the holding element 4. Thereby, when the fastening means are removed, the holding element 4 is free to move along the shaft 2 to the desired position, then the position of the holding element 4 is fixed by introducing the fastening means into the positioning plate 8a.

As depicted in the exemplary embodiment of Figure 1, the distal portion 1b may comprises a lifting interface 9 configured to engage with a connecting element 10, which is configured to connect the tool 100 with a lifting means e.g. crane. Alternatively, the tool 100 may be lifted with a lift trolley, e.g. a lift trolley with wheels.

In such example depicted, a first counterweight element 11a is arranged to the shaft 2 and second counterweight element 11b is arranged to the frame 1, wherein the first counterweight element 11a and the second counterweight element 11b are configured to allow plates to be added or detached to adjust a weight balance. The plates may have a center hole and may be introduced into the shaft 2 and into the frame 1 respectively.

A handling element 12 is arranged at the frame 1 and is configured to handle the direction of the tool 100 by the operator. In a preferred embodiment, the frame 1 has two handling elements 12, one per each side of the frame 1.

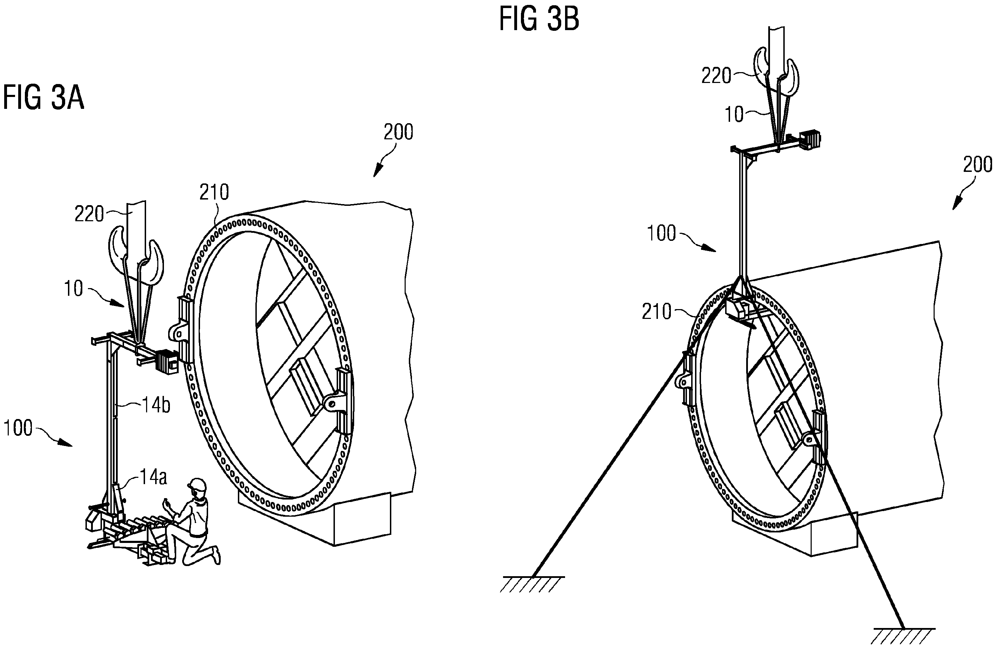

A retaining element 13 is arranged at the frame 1 and configured to be hooked to a pulling element (e.g. a rope) that is connected to a supporting point, in particular to the ground (as shown in Fig 3b).

A protective element 14a and 14b is arranged at the frame 1 and is configured to protect the frame 1 from damage caused by the friction with the tower flange or any external element. The protective element 14a and 14b is made from a soft material such as rubber or plastic.

A first supporting element 15a is arranged at the shaft 2 and a second supporting element 15b is arranged at the distal portion 1b of the frame 1. Both are configured to support the tool 100 on the ground during e.g. transport or in the installation site.

In another embodiment of the invention, the shaft 2 and the frame 1 together form an essentially L-shaped arrangement, the shaft 2 defines a first leg of the L-shape that extends into the tower flange 210 (not shown), and the frame 1 defining a second leg that remains external to the flange for lifting.

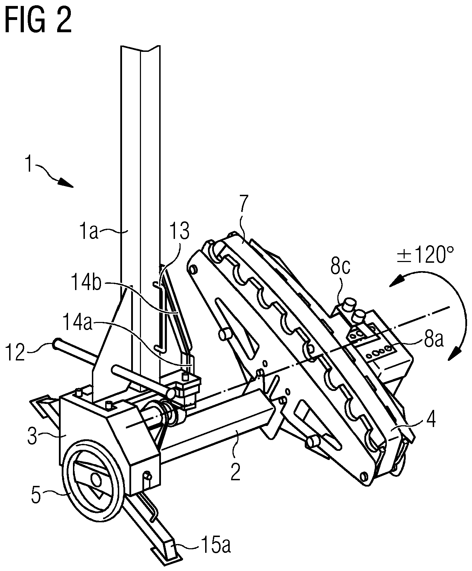

Fig 2 shows an exemplary embodiment or example of the tool of the present invention with the holding element 4 rotated in 120°C in respect to the X axis. The frame 1 has a proximal portion 1a which is connected to the shaft 2 through the moving means 3. In the figure is shown the crank 5 which is operatively connected to the gear transmission 6 (not shown). Thus, when the crank 5 is operated manually by the operator or automatically by a generated force, the shaft 2 is rotated and consequently the holding element 4 which is fixedly mounted to the shaft 2. The holding element 4 has a curved shaped and is configured to secure the plurality of bolts in a curved arrangement. The securing element 7 may be a belt or a strap and surrounds the holding element 4 in order to secure the plurality of bolts and prevent them to fall when the holding element 4 is rotated.

The handling element 12 allows the operator to handle and rotate the tool 100 in respect to the Y axis.

Fig 3a. shows an installation arrangement in accordance with an exemplary embodiment of the present invention, wherein the tool 100 is provided, a working tower section 200 comprising a tower flange 210 and lifting means 220 e.g. a crane or a lifting trolley. It also shows the steps of the method for positioning bolts, wherein an operator places a plurality of bolts within the holding element 4. According to the method of the invention, the operator places the plurality of bolts within the holding element 4, secures the plurality of bolts with the securing element 7 e.g. a belt or a strap. Afterwards, the tool 100 is lifted or moved with a lifting means 220 (e.g. a crane) towards the tower flange 210 of the working tower section 200. The tool 100 has a connecting element 10 which is connected to a lifting interface 9 fixed at the distal portion 1a, the tool 100 is connected to the lifting means with the connection element 10.

Fig 3b. shows the tool 100 of Fig 2a. being lifted during operation and positioning the bolts in the tower flange 210. In accordance with this example been depicted, the tool 100 has a retaining element 13 arranged at the proximal portion 1a of the frame 1, where is hooked with a pulling element to a supporting point (e.g. a rope hooking the retaining element to the ground).

As depicted in Fig.3b as an example, a retaining element 13 is arranged at the frame 1 and configured to be hooked to a pulling element (e.g. a rope) that is connected to a supporting point, in particular to the ground (as shown in Fig 3b).

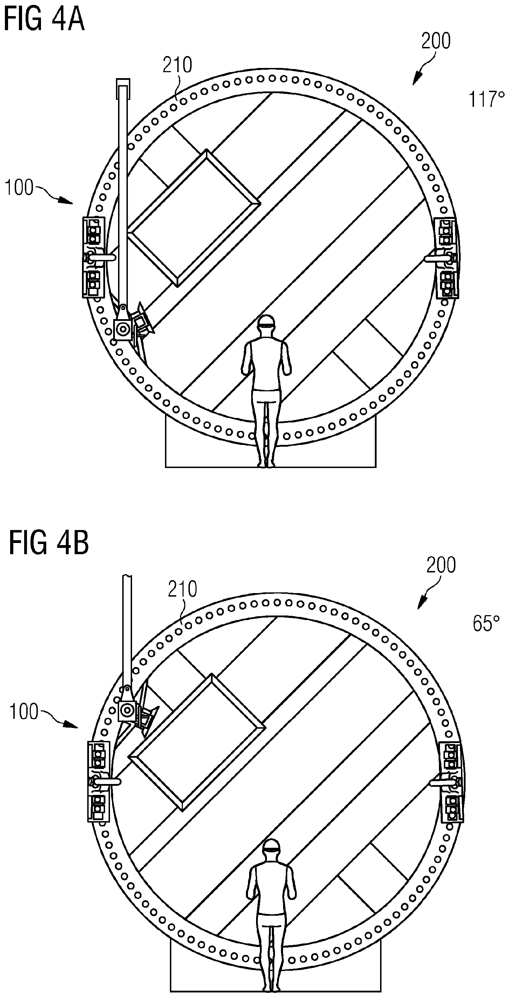

Fig 4a and 4b shows the tool 100 during operation, inserting the bolts in different positions of the tower flange 210 of the working tower section 200. This operation is repeated until all the bolts are installed.

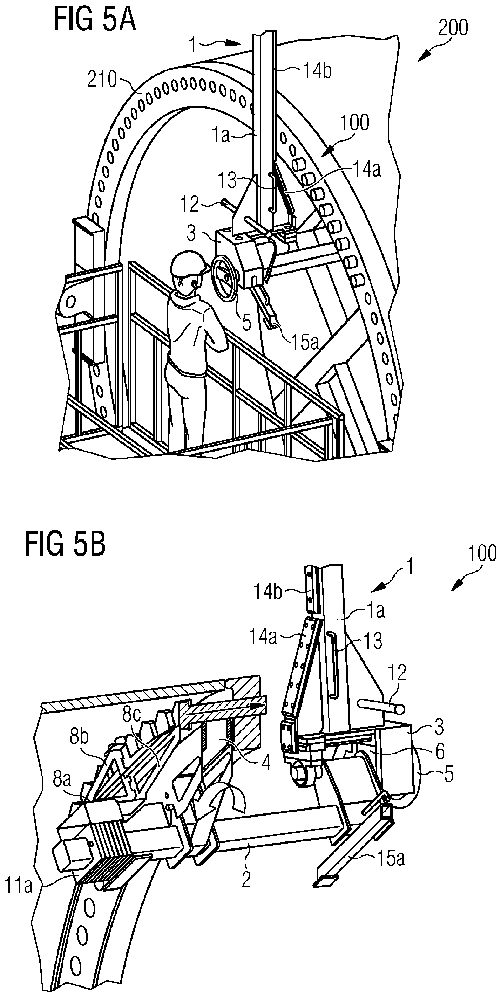

Fig 5a shows an operator manually operating the tool 100 by rotating the shaft 2 with the crank 5.

Fig 5b shows the tool 100 during operation when the plurality of bolts are inserted in the holes of the tower flange 210. The protective elements 14a and 14b are placed in the proximal portion 1a of the frame 1 in such a way that are facing the tower flange 210 during operation to prevent to damage the working tower section 200 by being scratched by the tool 100. cccc

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. A tool (100) intended for positioning bolts in a tower flange (210) of a working tower section (200), the tool (100) comprising:
a frame (1), comprising a proximal portion (1a) and a distal portion (1b),
a shaft (2) rotatably mounted on the proximal portion (1a) of the frame (1),
moving means (3) operatively connected to the shaft (2) to facilitate rotation of said shaft (2),
a holding element (4) fixedly mounted on the shaft (2), configured to secure a plurality of bolts within the holding element (4), wherein the holding element (4) retain a plurality of bolts in a curved arrangement, in particular said curved arrangement being essentially aligned with a bolt holes forming an arc in the tower flange (210).

2. The tool (100) according to claim 1, wherein the holding element (4) comprises housings arranged parallel to the shaft (2), to retain the plurality of bolts therein.

3. The tool (100) according to claim 1, wherein the moving means (3) comprise a gear transmission (6), in particular the moving means (3) further comprising a crank (5) operatively connected to the gear transmission (6) in such a way that a manual mechanical force applied on the crank (5) rotates the shaft (2).

4. The tool (100) according to anyone of the previous claims, wherein the moving means (3) is configured to rotate the shaft (2) under the influence of a mechanically, electrically, pneumatic and/or hydraulically generated force.

5. The tool (100) according to any of the previous claims, further comprising a securing element (7) and wherein the securing element (7) is a belt, a strap, or at least one magnet.

6. The tool (100) according to any of the previous claims, further comprising an adjustable mechanism (8) configured to fix the holding element (4) to the shaft (2) through multiple positions along the length of the shaft (2).

7. The tool (100) according to claim 6, wherein the adjustable mechanism (8) comprises:
a positioning plate (8a) fixedly configured to be attached to the shaft (2) with fastening means, and
a supporting frame (8b, 8c) configured to mechanically connect to the positioning plate (8a), in particular said supporting frame (8b,8c) configured to extend at least partially along the length and/or height of the holding element (4).

8. The tool (100) according to any of the previous claims, wherein the shaft (2) extends as an appendage from the frame (1) and is configured to enter the tower flange (210) parallel to the tower's longitudinal axis, while the frame (1) remains external to the tower flange (210) during operation.

9. The tool (100) according to any of the previous claims, wherein the frame (1) and the shaft (2) form an essentially C-shaped arrangement, wherein:
the proximal portion (1a) and the distal portion (1b) of the frame (1) forms two legs of the C-shape, wherein the distal portion (1b) extends outwardly and transversely from the proximal portion (1a), and
the shaft (2) completes the C-shape as an appendage extending from the distal portion (1a) and configured to enter the tower flange (210) during operation.

10. The tool (100) according to claim 1, wherein the shaft (2) and the frame (1) together form an essentially L-shaped arrangement, the shaft (2) defining a first leg of the L-shape that extends into the tower flange (210), and the frame (1) defining a second leg that remains external to the flange for lifting.

11. The tool (100) according to any of the previous claims, further comprising a first counterweight element (11a) arranged to the shaft (2), and a second counterweight element (11b) arranged to the frame (1), wherein the first counterweight element (11a) and the second counterweight element (11b) are configured to allow plates to be added or detached to adjust a weight balance.

12. An installation arrangement, comprising:
- the tool (100) of claim 1,
- a working tower section (200) comprising the tower flange (210), and
- a lifting means (220) configured to lift the tool (100).

13. A method for positioning bolts, comprising the steps of:
- providing the tool (100) of claim 1,
- placing a plurality of bolts within the holding element (4),
- securing the plurality of bolts,
- lifting or moving the tool (100) with a lifting means (220) towards a tower flange (210) of a working tower section (200),
- positioning the shaft (2) and the holding element (4) within the tower flange (210),
- rotating the shaft (2) and the holding element (4) using the moving means (3) until the plurality of bolts within the holding element (4) are aligned with the plurality of bolt holes in the tower flange (210),
- inserting the bolts into corresponding holes of the tower flange (210), and
- releasing the bolts from the holding element (4).

14. The method according to claim 13, wherein the working tower (200) is initially placed in a horizontal position, the method further comprising the steps:
- fixing an annular supporting plate within the working tower section (200), and
- lifting and rotating the working tower section (200) with the lifting means (220) to a vertical position, such that the annular supporting plate supports the plurality of bolts.

15. The method according to claim 14, wherein the method further comprises the steps of:
- placing a second tower section (200') on top of the working tower section (200),
- pushing the bolts upwards to introduce them partially into the flange holes of the second tower section (200') and securing the bolts therein.
